# EUROPÄISCHE PATENTSCHRIFT

(11) **EP 2 433 831 B1**
(45) Veröffentlichungstag und Bekanntmachung des Hinweises auf die Patenterteilung: **15.06.2022**
(21) Anmeldenummer: 11007604.9
(22) Anmeldetag: 19.09.2011
(51) Int. Cl.: B60L 50/51, B60L 58/12, B60L 50/60, B60L 7/18, B60L 3/06, B60L 3/00, B60L 7/14, B60L 15/20

(54) **Verfahren zum Betreiben eines elektrisch angetriebenen Flurförderzeugs**
Method for operating an electrically powered industrial truck
Procédé destiné au fonctionnement d'un chariot de manutention fonctionnant de manière électrique

(30) Priorität: 23.09.2010 DE 102010046172
(43) Veröffentlichungstag der Anmeldung: 28.03.2012
(73) Patentinhaber: Jungheinrich Aktiengesellschaft, 22047 Hamburg (DE)
(72) Erfinder: Aldag, Reinhard, 24537 Neumünster (DE); Claussen, Hans-Peter, 24576 Bad Bramstedt (DE); Mahler, Arne, 22335 Hamburg (DE)
(74) Vertreter: Hauck Patentanwaltspartnerschaft mbB

(56) Entgegenhaltungen:
- EP-A2- 1 767 426
- DE-A1- 19 841 186
- DE-A1-102007 037 693
- DE-U- 1 769 037
- JP-A- 2002 199 556
- JP-A- 2008 054 441
- US-A- 5 775 784
- US-A1- 2013 089 994

## Beschreibung

Die Erfindung betrifft ein Verfahren zum Betreiben eines elektrisch angetriebenen Flurförderzeugs, bei dem eine Batterie mit einem Ladestrom aufgeladen wird, der beim Abbremsen des Flurförderzeugs von einem Fahrantriebsmotor erzeugt wird, sowie ein solches Flurförderzeug.

Es ist bekannt, bei elektromotorisch angetriebenen Flurförderzeugen beim Bremsen Energie zurückzugewinnen. Dazu wird der Fahrantriebsmotor des Flurförderzeugs beim Bremsen als Generator betrieben, und der erzeugte Ladestrom wird in die Batterie eingespeist. Dadurch ist bei gegebener Speicherkapazität der Batterie eine längere Betriebsdauer möglich, oder es kann eine Batterie mit geringerer Kapazität zum Einsatz kommen. Wird bei annähernd voller Batterie gebremst und ein hoher Ladestrom in die Batterie eingespeist, kann es zu hohen Batteriespannungen und damit zu hohen Spannungen an einer Steuerung und allen weiteren elektrischen und elektronischen Komponenten des Flurförderzeugs kommen. Zum Schutz der elektrischen Baugruppen vor zu hohen Spannungen wird bei Überschreiten einer Obergrenze für die Spannung eine Notabschaltung ausgelöst. Durch dieses Stillsetzen des Flurförderzeugs wird einerseits die Verfügbarkeit des Flurförderzeugs beeinträchtigt. Andererseits kann es zu kritischen Fahrsituationen kommen, denn beim Stillsetzen kann beispielsweise eine Federspeicherbremse ausgelöst werden, die das Fahrzeug abrupt anhält.

Die DE 10 2007 037 693 A1 betrifft eine Hybrid-Fahrersitz-Zugmaschine, die von einem Elektromotor und einem Verbrennungsmotor angetrieben wird. Das beschriebene Fahrzeug verfügt über mehrere Rekuperationsmodi, in denen beim Abbremsen elektrische Energie zurückgewonnen werden kann. Die Druckschrift sieht vor, das Umschalten zwischen Motor- und Generatorbetrieb nicht alleine von der Fahrpedalstellung abhängig zu machen, sondern von der Stromrichtung des elektrischen Antriebsstroms in einem Leistungskreis.

Davon ausgehend ist es die Aufgabe der Erfindung, ein Verfahren zum Betreiben eines elektrisch angetriebenen Flurförderzeugs und ein solches Flurförderzeug zur Verfügung zu stellen, bei dem ein Aufladen der Batterie beim Abbremsen zuverlässig und sicher möglich ist, ohne dass es zu den einleitend erläuterten Problemen kommt.

Diese Aufgabe wird gelöst durch das Verfahren mit den Merkmalen des unabhängigen Anspruchs

1. Vorteilhafte Ausgestaltungen sind in den sich anschließenden abhängigen Ansprüchen angegeben.

Das Flurförderzeug weist mindestens ein angetriebenes Rad auf, das von dem Fahrantriebsmotor angetrieben wird. Das Antriebsrad kann lenkbar sein. Es kann sich um ein deichselgeführtes Flurförderzeug handeln. Es kann sich um einen Niederhub- oder um ein Hochhubflurförderzeug handeln. Das Flurförderzeug kann ein Mitgehfahrzeug sein, oder ein Mitfahrfahrzeug mit einer Standplattform oder einem Fahrersitz. Das Flurförderzeug kann eine im Falle einer Notabschaltung auslösende Feststellbremse aufweisen, insbesondere eine Federspeicherbremse. Zusätzlich zu dem Bremsen des Flurförderzeugs durch die Bremswirkung des Fahrantriebsmotors beim Erzeugen des Ladestroms kann das Flurförderzeug eine hydraulische oder mechanische Betriebsbremse aufweisen. Es kann sich jedoch auch um ein einfach aufgebautes Flurförderzeug handeln, das keine solche weitere Bremse aufweist.

Das Ermitteln eines Neigungswinkels des Flurförderzeugs erfolgt erfindungsgemäß mit Hilfe eines Beschleunigungs- oder Winkelsensors. Der Sensor kann die räumliche Orientierung des Flurförderzeugs in allen drei Raumrichtungen erfassen. In jedem Fall kann eine Neigung des Flurförderzeugs gegenüber der Horizontalen erfasst werden. Das Erfassen des Neigungswinkels kann als Ergebnis einen Zahlen- oder Messwert für den Neigungswinkel liefern, oder es kann auf eine Information darüber, ob ein vorgegebener maximaler Neigungswinkel überschritten wird, beschränkt sein. Bei der Inbetriebnahme des Flurförderzeugs, insbesondere bei der Erstinbetriebnahme nach Installation des jeweiligen Sensors, kann ein Einlernen des Sensors bei horizontaler Ausrichtung des Flurförderzeugs erforderlich sein, um eine Nulllage zu kalibrieren. Der Sensor kann in eine Steuerung des Flurförderzeugs integriert sein, insbesondere in die für die Ansteuerung des Fahrantriebsmotors vorgesehene Steuerung.

Das Ermitteln eines Ladezustandes der Batterie kann auf Grundlage einer gemessenen Batteriespannung erfolgen. Es ist auch möglich, den Ladezustand der Batterie kontinuierlich zu erfassen. Das Ermitteln des Ladezustandes kann sich auf das Über- oder Unterschreiten eines einzigen Schwellwerts für den maximalen Ladezustand beschränken. Alternativ kann der Ladezustand detaillierter ermittelt werden, beispielsweise durch Ermitteln eines Prozentwertes bezogen auf die maximale Kapazität der Batterie.

Die Höchstgeschwindigkeit des Flurförderzeugs ist eine maximal zulässige Fahrgeschwindigkeit im Betrieb des Flurförderzeugs auf ebenem Boden. Die aktuelle Fahrgeschwindigkeit kann durch eine Geschwindigkeitsmessung ermittelt werden, insbesondere aus einer Drehzahl des Fahrantriebsmotors. Bei der Erfindung wird die Fahrgeschwindigkeit des Flurförderzeugs auf eine maximale Fahrgeschwindigkeit begrenzt, falls der Ladezustand und der Neigungswinkel vorgegebene Höchstwerte überschreiten. Dadurch kann in vielen Fahrsituationen verhindert werden, dass die als problematisch erkannten hohen Spannungen durch das Aufladen der Batterie beim Abbremsen des Flurförderzeugs überhaupt entstehen. Den erkannten Problemen wird also an ihrer Wurzel entgegengewirkt.

Die Erfindung beruht auf der Erkenntnis, dass die hohen Batteriespannungen insbesondere immer dann entstehen können, wenn das Flurförderzeug bei bereits hohem Ladezustand an einem Hang betrieben wird, denn in dieser Situation ist bei einem Abbremsen des Flurförderzeugs mit hohen Ladeströmen und dadurch bedingten hohen Spannungen zu rechnen. Durch das Begrenzen der Fahrgeschwindigkeit auf einen unterhalb der Höchstgeschwindigkeit liegenden Wert kann verhindert werden, dass ein starkes Abbremsen erforderlich wird. Durch die Begrenzung der Fahrgeschwindigkeit wird die beim generatorischen Bremsen in einen Ladestrom umzusetzende kinetische Energie des Flurförderzeugs stark verringert. Durch das gleichzeitige Berücksichtigen des Ladezustandes kann das Flurförderzeug weiterhin mit Höchstgeschwindigkeit betrieben werden, wenn die Batterie zumindest soweit entladen ist, dass eine Überspannung beim Abbremsen nicht zu erwarten ist. Insgesamt ist ein weitgehend unbeeinträchtigter Betrieb des Flurförderzeugs möglich und das Auftreten zu hoher Batteriespannungen wird zuverlässig verhindert.

Das Begrenzen der Fahrgeschwindigkeit kann insbesondere durch automatisches Anpassen eines vorgegebenen Geschwindigkeitssollwertes erfolgen. Die Vorgabe des Geschwindigkeitssollwertes kann beispielsweise von einem Bediener über einen Fahrschalter erfolgen.

In einer Ausgestaltung erfolgt das Begrenzen der Fahrgeschwindigkeit nur unter der zusätzlichen Bedingung, dass eine aktuelle Fahrtrichtung des Flurförderzeugs bzgl. des Neigungswinkels abwärts gerichtet ist. Dadurch wird die Fahrgeschwindigkeit nur in Abwärtsrichtung begrenzt, wenn ein Abbremsen aus hoher Geschwindigkeit tatsächlich zu hohen Ladeströmen führen könnte. Bei einer Aufwärtsfahrt wird die Fahrgeschwindigkeit jedoch nicht unnötig begrenzt. Die aktuelle Fahrtrichtung des Flurförderzeugs kann insbesondere aus einer Deichselstellung des Flurförderzeugs, einem Lenkwinkel eines gelenkten Rads, insbesondere eines gelenkten Antriebsrads, und/oder aus einer aktuellen Antriebsrichtung (vorwärts/rückwärts) ermittelt werden. Das Ermitteln der aktuellen Fahrtrichtung kann in einer Steuerung des Flurförderzeugs erfolgen, insbesondere in der für die Steuerung des Fahrantriebsmotors zuständigen Steuerung.

In einer Ausgestaltung wird der Neigungswinkel stets auf eine aktuelle Fahrtrichtung bezogen. Der Prüfung, ob der vorgegebene maximale Neigungswinkel überschritten wird, wird also nicht der absolute Neigungswinkel gegenüber einer horizontalen Ebene, sondern der Neigungswinkel in Bezug auf die aktuelle Fahrtrichtung zugrunde gelegt. Es wird also nur eine für die wirksamwerdende Hangabtriebskraft maßgebliche Neigung des Flurförderzeugs berücksichtigt. Dadurch kann eine nicht erforderliche Beschränkung der Fahrgeschwindigkeit auf geneigten Untergründen, die nicht oder nur teilweise in Abwärtsrichtung befahren werden, vermieden werden.

In einer Ausgestaltung erfolgt das Begrenzen der Fahrgeschwindigkeit durch Ansteuern des Fahrantriebsmotors. Grundsätzlich kann das Begrenzen der Fahrgeschwindigkeit durch beliebige Maßnahmen erzielt werden, beispielsweise durch Ansteuern einer Betriebsbremse. Ein Ansteuern des Fahrantriebsmotors zur Begrenzung der Fahrgeschwindigkeit ist jedoch besonders einfach und kann beispielsweise durch Anpassen eines Geschwindigkeitssollwertes erfolgen. Gleichzeitig wird ein unnötiger Energieverbrauch durch gleichzeitiges Antreiben und Bremsen verhindert. Außerdem ist es durch Ansteuerung des Fahrantriebsmotors besonders einfach möglich, eine sanfte und rückfreie Begrenzung der Fahrgeschwindigkeit zu erzielen.

In einer Ausgestaltung nimmt die maximale Fahrgeschwindigkeit in Abhängigkeit des Ladezustands und des Neigungswinkels unterschiedliche Werte an. Gegebenenfalls kann zusätzlich ein Beladungszustand des Flurförderzeugs vorgesehen sein, beispielsweise in Verbindung mit Flurförderzeugen mit einer Lastsensierung. Durch Begrenzen der maximalen Fahrgeschwindigkeit auf unterschiedliche Werte kann ein optimaler Kompromiss zwischen der zuverlässigen Vermeidung von Überspannungen und einer Beeinträchtigung der Fahrleistungen des Flurförderzeugs gefunden werden.

In einer Ausgestaltung erfolgt zusätzlich zum Begrenzen der Fahrgeschwindigkeit ein Begrenzen einer Beschleunigung des Flurförderzeugs auf eine maximale Beschleunigung, die betragsmäßig kleiner ist als eine Höchstbeschleunigung des Flurförderzeugs. Die Höchstbeschleunigung des Flurförderzeugs ist ein vorgegebener Wert, der beispielsweise als Parameter in eine Fahrsteuerung eingegeben werden kann. Das Einstellen einer Höchstbeschleunigung von beispielsweise 2 m/s² kann ein Verrutschen einer Last beim Anfahren oder Abbremsen vermeiden. Ein Begrenzen der Beschleunigung auf eine kleinere maximale Beschleunigung kann sich auf zweierlei Weise vorteilhaft auswirken. Eine Begrenzung der positiven Beschleunigung, d.h. der Beschleunigung beim Anfahren, verhindert, dass zu schnell hohe Fahrgeschwindigkeiten in Abwärtsrichtung erreicht werden. Ein Begrenzen der negativen Beschleunigung, d.h. der Verzögerung beim Abbremsen des Flurförderzeugs, wirkt sich unmittelbar auf den beim Abbremsen erzeugten Ladestrom aus und kann so durch Begrenzen des Ladestroms Überspannungen an der Batterie entgegenwirken, die sich anderenfalls bei einem scharfen Abbremsen auch ausgehend von einer relativ geringen Fahrgeschwindigkeit ergeben können. Wie oben im Zusammenhang mit der maximalen Fahrgeschwindigkeit erläutert, kann auch die maximale Beschleunigung in Abhängigkeit des Ladezustands und/oder des Neigungswinkels und/oder eines Beladungszustands unterschiedliche Werte annehmen.

In einer Ausgestaltung wird eine aktuelle Höhe des Flurförderzeugs relativ zu einer Ausgangsposition ermittelt und ein Begrenzen der Fahrgeschwindigkeit und/oder der Beschleunigung erfolgt unabhängig vom Neigungswinkel, falls die aktuelle Höhe eine vorgegebene maximale Höhe überschreitet. Die Ausgangsposition kann beispielsweise diejenige Höhe sein, in der sich das Flurförderzeug bei Inbetriebnahme befindet. Überschreitet die aktuelle Höhe diese Ausgangsposition um eine vorgegebene maximale Höhe, beispielsweise um 2 m, erfolgt eine Begrenzung der Fahrgeschwindigkeit und/oder der Beschleunigung unabhängig vom Neigungswinkel, d.h. beispielsweise auch dann, wenn das Flurförderzeug in einer Ebene eingesetzt wird. Dadurch kann ein schnelles Hineinfahren in ein Gefälle, was ein starkes Abbremsen erforderlich machen könnte, vermieden werden. Welche Einschränkung für den Betrieb des Flurförderzeugs diese Begrenzung ab Erreichen einer bestimmten Höhe bedeutet, hängt von den weiteren Einsatzbedingungen ab. Wird beispielsweise regelmäßig eine Last nahe dem oberen Ende einer Rampe aufgenommen, bedeutet die Begrenzung auf dem hohen Niveau keine wesentliche Beeinträchtigung, während eine Überwindung des Gefälles ohne das Auftreten von Batterieüberspannungen wirksam verhindert wird.

In einer Ausgestaltung wird die aktuelle Höhe fortlaufend auf Grundlage von zurückgelegten Streckenabschnitten und zugehörigen Neigungswinkeln ermittelt Die Streckenabschnitte können beispielsweise durch die Drehungen eines Antriebsrads erfasst werden. Wenn der Neigungswinkel ebenfalls fortlaufend und bezogen auf die aktuelle Fahrtrichtung erfasst wird, kann einfach festgestellt werden, welche Höhendifferenz während des Streckenabschnitts überwunden wurde und die aktuelle Höhe kann durch "Aufintegrieren" der Höhendifferenzen bestimmt werden.

Die obengenannte Aufgabe wird ebenfalls gelöst durch das elektrisch angetriebene Flurförderzeug mit den Merkmalen des unabhängigen Anspruchs 9. Vorteilhafte Ausgestaltungen sind in den sich anschließenden abhängigen Ansprüchen angegeben.

Hinsichtlich der Merkmale des Flurförderzeugs wird auf die vorstehenden Erläuterungen der korrespondierenden Verfahrensmerkmale verwiesen. Die Einrichtung zum Aufladen der Batterie kann in die Steuerung integriert sein. Die Einrichtung zum Ermitteln des Ladezustands der Batterie kann ebenfalls in die Steuerung integriert sein, ebenso wie die Einrichtung zum Ermitteln des Neigungswinkels und/oder die Einrichtung zur Begrenzung der Fahrgeschwindigkeit. Es versteht sich, dass die genannten Einrichtungen ganz oder teilweise in Form von Software verwirklicht sein können.

Die Erfindung wird nachfolgend anhand eines in zwei Figuren dargestellten Ausführungsbeispiels näher erläutert. Es zeigen:
Figur 1: Ein erfindungsgemäßes elektrisch angetriebenes Flurförderzeug und
Figur 2: Eine schematische Darstellung zur Erläuterung des erfindungsgemäßen Verfahrens.

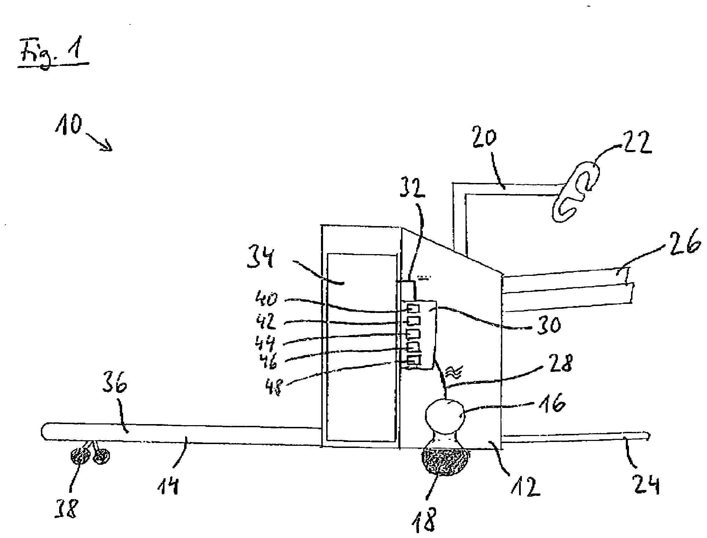

Die Figur 1 zeigt ein Flurförderzeug 10 mit einem Antriebsteil 12 und einem Lastteil 14. Das Antriebsteil 12 hat einen elektrischen Fahrantriebsmotor 16 und ein von diesem angetriebenes Antriebsrad 18. Das Antriebsrad 18 ist über eine Deichsel 20 mit einem Deichselkopf 22 lenkbar.

Bei dem in der Figur dargestellten Flurförderzeug 10 handelt es sich um ein als Mitfahrfahrzeug ausgeführtes Niederhubflurförderzeug, dass am Antriebsteil 12 eine ausklappbare Standplattform 24 und zwei seitlich parallel beabstandete Arme 26 aufweist, zwischen denen eine auf der Standplattform 24 mitfahrende Bedienperson Halt findet.

Der Fahrantriebsmotor 16 ist über eine 3-phasige Stromleitung 28 mit einer Steuerung 30 verbunden. Ober die Stromleitung 28 wird der Fahrantriebsmotor 16 mit einem 3-phasigen Wechselstrom versorgt. Weiterhin ist die Steuerung 30 über eine 2-polige Stromleitung 32 mit einer im Lastteil 14 angeordneten Batterie 34 verbunden.

Das Lastteil 14 weist zwei parallel angeordnete Radarme 36 auf, die zugleich ein Lasttragmittel bilden und jeweils mit zwei schwenkbaren Lastrollen 38 versehen sind.

Die Steuerung 30 umfasst eine Einrichtung zum Aufladen der Batterie 40, eine Einrichtung zum Ermitteln eines Ladezustandes 42, eine Einrichtung zum Ermitteln eines Neigungswinkels 44, eine Einrichtung zum Begrenzen einer Fahrgeschwindigkeit 46 und eine Einrichtung zum Begrenzen einer Beschleunigung 48. Alle genannten Einrichtungen können ganz oder teilweise in Form von Software vorliegen, die auf einem Rechner der Steuerung 30 läuft. Dies gilt insbesondere für die Einrichtung zum Aufladen der Batterie 40, die Einrichtung zum Begrenzen einer Fahrgeschwindigkeit 46 und die Einrichtung zum Begrenzen einer Beschleunigung 48. Diese drei Einrichtungen werden im Wesentlichen durch Ansteuerung eines in der Steuerung 30 enthaltenen Umrichters wirksam, der einen Stromfluss zwischen Batterie 34 und Fahrantriebsmotor 16 steuert.

Die Einrichtung zum Ermitteln eines Neigungswinkels 44 weist einen Beschleunigungssensor auf, der eine seismische Masse enthält und dessen Sensordaten die Ermittlung eines Neigungswinkels des Flurförderzeugs in allen drei Raumrichtungen ermöglichen.

Die Einrichtung zum Ermitteln eines Ladezustands 42 weist einen Spannungssensor auf, mit dem die aktuelle Batteriespannung der Batterie 34 gemessen wird.

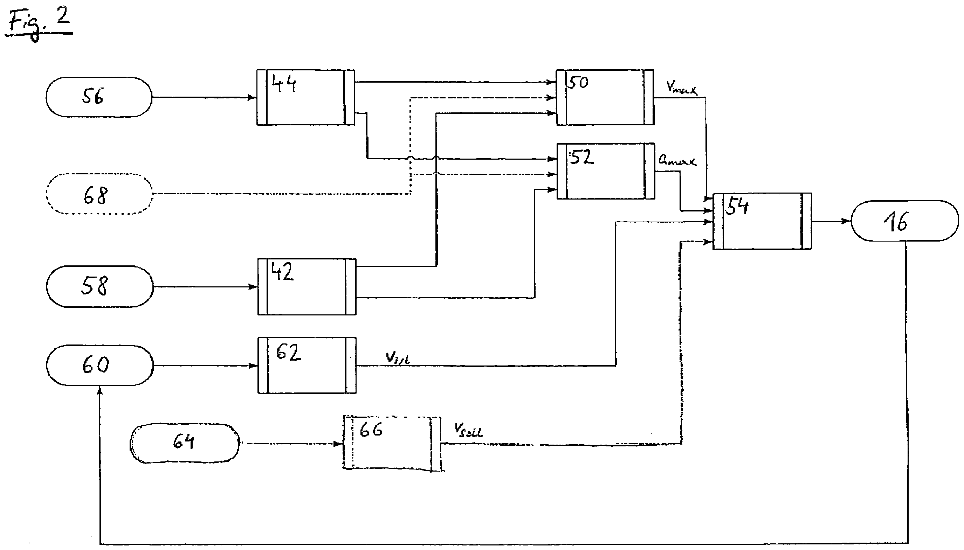

Anhand der Figur 2 werden die Schritte des erfindungsgemäßen Verfahrens crläutert. Ein Beschleunigungssensor 56 liefert Sensordaten, die einer Einrichtung zum Ermitteln eines Neigungswinkels 44 zur Verfügung gestellt werden. Die Einrichtung zum Ermitteln eines Neigungswinkels 44 berechnet ausgehend von den Daten des Beschleunigungssensors 56 einen Neigungswinkel, der einer Einrichtung zum Ermitteln einer maximalen Fahrgeschwindigkeit 50 und einer Einrichtung zum Ermitteln einer maximalen Beschleunigung 52 als Eingangsgröße zugeführt wird.

Ein Spannungssensor 58 misst eine aktuelle Batteriespannung und stellt diesen Messwert einer Einrichtung zum Ermitteln eines Ladezustandes 42 der Batterie 34 zur Verfügung. Diese leitet eine Information über den Ladezustand an die Einrichtung zum Ermitteln einer maximalen Fahrgeschwindigkeit 50 und an die Einrichtung zum Ermitteln einer maximalen Beschleunigung 52 als weitere Eingangsgrößen weiter.

Die Einrichtung zum Ermitteln einer maximalen Fahrgeschwindigkeit 50 liefert einen Wert vₘₐₓ für die maximale Fahrgeschwindigkeit. Die Einrichtung zum Ermitteln einer maximalen Beschleunigung 52 liefert einen Wert aₘₐₓ für die maximale Beschleunigung. Die beiden Werte aₘₐₓ. vₘₐₓ werden einer Einrichtung zur Ansteuerung des Fahrantriebsmotors 54 als Eingangsgrößen zur Verfügung gestellt. Die Einrichtung zur Ansteuerung des Fahrantriebsmotors 54 steuert den Fahrantriebsmotor 16 an, wobei die Fahrgeschwindigkeit und die Beschleunigung des Flurförderzeugs entsprechend den Grenzwerten vₘₐₓ und aₘₐₓ begrenzt werden.

Der Fahrantriebsmotor 16 ist mit einem Drehzahlgeber 60 verbunden, der einen Wert für die aktuelle Drehzahl des Fahrantriebsmotors 16 an eine Einrichtung zum Ermitteln einer aktuellen Geschwindigkeit 62 zur Verfügung stellt. Diese berechnet eine aktuelle Fahrgeschwindigkeit vᵢₛₜ und stellt diese der Einrichtung zur Ansteuerung des Fahrantriebsmotors 54 zur Verfügung. Als weiteren Eingangswert erhält die Einrichtung zur Ansteuerung des Fahrantriebsmotors 54 einen Geschwindigkeitssollwert vₛₒₗₗ der von einer Einrichtung zum Ermitteln eines Geschwindigkeitssollwerts 66 auf Grundlage einer über den Fahrschalter 64 erfolgenden Benutzervorgabe ermittelt wird. Als Alternative zu dem Bcschleunigungssensor 56 kann ein Winkelsensor 68 verwendet werden, der unmittelbar einen Neigungswinkel ausgibt, welcher - wie durch die gestrichelten Linien angedeutet - der Einrichtung zum Ermitteln einer maximalen Fahrgeschwindigkeit 50 und der Einrichtung zum Ermitteln einer maximalen Beschleunigung 52 zur Verfügung gestellt wird.

Die Einrichtung zum Ermitteln einer maximalen Fahrgeschwindigkeit 50, die Einrichtung zum Ermitteln einer maximalen Beschleunigung 52 und die Einrichtung zum Ansteuern des Fahrantriebsmotors 54 bilden gemeinsam eine Einrichtung zum Begrenzen der Fahrgeschwindigkeit und der Beschleunigung.

## Patentansprüche

1. Verfahren zum Betreiben eines elektrisch angetriebenen Flurförderzeugs (10) nach einem der Ansprüche 9 bis 15 mit den folgenden Schritten:
• Aufladen einer Batterie (34) mit einem Ladestrom, der beim generatorischen Abbremsen des Flurförderzeugs (10) von einem Fahrantriebsmotor (16) erzeugt wird, **gekennzeichnet durch** die folgenden Schritte:
• Ermitteln eines Neigungswinkels des Flurförderzeugs (10) mit Hilfe eines Beschleunigungssensors (56) oder eines Winkelsensors (68) zumindest gegenüber einer horizontalen Ebene,
• Ermitteln eines Ladezustands der Batterie (34),
• Begrenzen der Fahrgeschwindigkeit des Flurförderzeugs (10) auf eine maximale Fahrgeschwindigkeit (vₘₐₓ), die kleiner ist als eine maximal zulässige Fahrgeschwindigkeit im Betrieb des Flurförderzeugs (10) auf ebenem Boden, falls der Ladezustand einen vorgegebenen maximalen Ladezustand und der Neigungswinkel einen vorgegebenen maximalen Neigungswinkel überschreitet, um die Entstehung hoher Batteriespannungen durch das Aufladen der Batterie (34) beim generatorischen Abbremsen des Flurförderzeugs (10) zu vermeiden.

2. Verfahren nach Anspruch 1, **dadurch gekennzeichnet, dass** das Begrenzen der Fahrgeschwindigkeit nur unter der zusätzlichen Bedingung erfolgt, dass eine aktuelle Fahrtrichtung des Flurförderzeugs (10) bezüglich des Neigungswinkels abwärts gerichtet ist.

3. Verfahren nach Anspruch 1 oder 2, **dadurch gekennzeichnet, dass** der Neigungswinkel stets auf eine aktuelle Fahrtrichtung bezogen wird.

4. Verfahren nach einem der Ansprüche 1 bis 3, **dadurch gekennzeichnet, dass** das Begrenzen der Fahrgeschwindigkeit durch Ansteuern des Fahrantriebsmotors (16) erfolgt.

5. Verfahren nach einem der Ansprüche 1 bis 4, **dadurch gekennzeichnet, dass** die maximale Fahrgeschwindigkeit (vₘₐₓ) in Abhängigkeit des Ladezustands und des Neigungswinkels unterschiedliche Werte annimmt.

6. Verfahren nach einem der Ansprüche 1 bis 5, **dadurch gekennzeichnet, dass** zusätzlich zum Begrenzen der Fahrgeschwindigkeit ein Begrenzen einer Beschleunigung des Flurförderzeugs (10) auf eine maximale Beschleunigung (aₘₐₓ) erfolgt, die betragsmäßig kleiner ist als eine Höchstbeschleunigung des Flurförderzeugs (10).

7. Verfahren nach einem der Ansprüche 1 bis 6, **dadurch gekennzeichnet, dass** eine aktuelle Höhe des Flurförderzeugs (10) relativ zu einer Ausgangsposition ermittelt wird und ein Begrenzen der Fahrgeschwindigkeit und/oder der Beschleunigung unabhängig vom Neigungswinkel erfolgt, falls die aktuelle Höhe eine vorgegebene maximale Höhe überschreitet.

8. Verfahren nach Anspruch 7, **dadurch gekennzeichnet, dass** die aktuelle Höhe fortlaufend auf Grundlage von zurückgelegten Streckenabschnitten und zugehörigen Neigungswinkeln ermittelt wird.

9. Elektrisch angetriebenes Flurförderzeug (10) mit
• einem Fahrantriebsmotor (16),
• einer Batterie (34),
• einer Steuerung (30) zur Steuerung des Fahrantriebsmotors (16),
• einer Einrichtung (40) zum Aufladen der Batterie (34) mit einem von dem Fahrantriebsmotor (16) beim generatorischen Abbremsen des Flurförderzeugs (10) erzeugten Ladestrom und
• einer Einrichtung (42) zum Ermitteln eines Ladezustands der Batterie (34), **gekennzeichnet durch**
• eine Einrichtung (44) zum Ermitteln eines Neigungswinkels des Flurförderzeugs (10) mit Hilfe eines Beschleunigungssensors (56) oder eines Winkelsensors (68) zumindest gegenüber einer horizontalen Ebene und
• eine Einrichtung (46) zur Begrenzung der Fahrgeschwindigkeit (16) des Flurförderzeugs (10) auf eine maximale Fahrgeschwindigkeit (vₘₐₓ), die kleiner ist als eine maximal zulässige Fahrgeschwindigkeit im Betrieb des Flurförderzeugs (10) auf ebenem Boden, wobei die Einrichtung (46) zur Begrenzung der Fahrgeschwindigkeit so ausgebildet ist, dass die Begrenzung erfolgt, falls der Ladezustand einen vorgegebenen maximalen Ladezustand und der Neigungswinkel einen vorgegebenen maximalen Neigungswinkel überschreitet, um die Entstehung hoher Batteriespannungen durch das Aufladen der Batterie (34) beim generatorischen Abbremsen des Flurförderzeugs (10) zu vermeiden.

10. Flurförderzeug (10) nach Anspruch 9, **dadurch gekennzeichnet, dass** die Einrichtung (46) zum Begrenzen der Fahrgeschwindigkeit so ausgebildet ist, dass die Begrenzung nur unter der zusätzlichen Bedingung erfolgt, dass eine aktuelle Fahrtrichtung des Flurförderzeugs (10) bezüglich des Neigungswinkels abwärts gerichtet ist.

11. Flurförderzeug (10) nach Anspruch 9 oder 10, **gekennzeichnet durch** eine Einrichtung (44) zum Ermitteln eines auf eine aktuelle Fahrtrichtung bezogenen Neigungswinkels.

12. Flurförderzeug (10) nach einem der Ansprüche 9 bis 11, **gekennzeichnet durch** eine Einrichtung (46), die in Abhängigkeit des Ladezustands und des Neigungswinkels unterschiedliche Werte für die maximale Fahrgeschwindigkeit (vₘₐₓ) vorgibt.

13. Flurförderzeug (10) nach einem der Ansprüche 9 bis 12, **gekennzeichnet durch** eine Einrichtung (48) zum Begrenzen einer Beschleunigung des Flurförderzeugs (10) auf eine maximale Beschleunigung (aₘₐₓ), die betragsmäßig kleiner ist als eine Höchstbeschleunigung des Flurförderzeugs (10).

14. Flurförderzeug (10) nach einem der Ansprüche 9 bis 13, **gekennzeichnet durch** eine Einrichtung zum Ermitteln einer aktuelle Höhe des Flurförderzeugs (10) relativ zu einer Ausgangsposition, wobei die Einrichtung zum Begrenzen der Fahrgeschwindigkeit (46) und/oder der Beschleunigung (48) so ausgebildet ist, dass das Begrenzen der Fahrgeschwindigkeit und/oder der Beschleunigung unabhängig vom Neigungswinkel erfolgt, falls die aktuelle Höhe eine vorgegebene maximale Höhe überschreitet.

15. Flurförderzeug (10) nach Anspruch 14, **dadurch gekennzeichnet, dass** die Einrichtung zum Ermitteln einer aktuellen Höhe so ausgebildet ist, dass sie die aktuelle Höhe fortlaufend auf Grundlage von zurückgelegten Streckenabschnitten und zugehörigen Neigungswinkeln ermittelt.

## Claims

1. A method for operating an electrically driven industrial truck (10) as claimed in one of claims 9 to 15, comprising the following steps:
- charging a battery (34) with a charging current which is generated by a traction drive motor (16) during regenerative deceleration of the industrial truck (10), **characterized by** the following steps:
- determining an inclination angle of the industrial truck (10) by means of an acceleration sensor (56) or an angle sensor (68) at least relative to a horizontal plane,
- determining a state of charge of the battery (34) on the basis of a measured battery voltage,
- restricting the driving speed of the industrial truck (10) to a maximum driving speed (vₘₐₓ) which is less than a maximum permitted driving speed during the operation of the industrial truck (10) on level ground, if the state of charge exceeds a predetermined maximum state of charge and the inclination angle exceeds a predetermined maximum inclination angle, in order to avoid the production of high battery voltages by the charging of the battery (34) during regenerative deceleration of the industrial truck (10).

2. The method according to claim 1, **characterized in that** the restriction of the driving speed is carried out only under the additional condition that a current direction of travel of the industrial truck (10) is oriented downwardly relative to the inclination angle.

3. The method according to claim 1 or 2, **characterized in that** the inclination angle is always related to a current direction of travel.

4. The method according to one of claims 1 to 3, **characterized in that** the restriction of the driving speed is carried out by activating the traction drive motor (16).

5. The method according to one of claims 1 to 4, **characterized in that** the maximum driving speed (vₘₐₓ) adopts different values as a function of the state of charge and the inclination angle.

6. The method according to one of claims 1 to 5, **characterized in that** a restriction of an acceleration of the industrial truck (10) to a maximum acceleration (aₘₐₓ) is carried out in addition to a restriction of the driving speed, the value of said maximum acceleration being less than a peak acceleration of the industrial truck (10).

7. The method according to one of claims 1 to 6, **characterized in that** a current elevation of the industrial truck (10) is determined relative to an initial position and a restriction of the driving speed and/or the acceleration is carried out irrespective of the inclination angle if the current elevation exceeds a predetermined maximum elevation.

8. The method according to claim 7, **characterized in that** the current elevation is determined continuously on the basis of the route sections covered and the associated inclination angles.

9. An electrically driven industrial truck (10) comprising
- a traction drive motor (16),
- a battery (34),
- a controller (30) for controlling the traction drive motor (16),
- an apparatus for charging (40) the battery (34) with a charging current which is generated by the traction drive motor (16) during regenerative deceleration of the industrial truck (10) and
- an apparatus for determining a state of charge (42) of the battery (34) on the basis of a measured battery voltage,
**characterized by**
- an apparatus for determining an inclination angle (44) of the industrial truck (10) by means of an acceleration sensor (56) or an angle sensor (68) at least relative to a horizontal plane and
- an apparatus for restricting the driving speed (46) of the industrial truck (10) to a maximum driving speed (vₘₐₓ) which is less than a maximum permitted driving speed during the operation of the industrial truck (10) on level ground, wherein the apparatus for restricting the driving speed (46) is configured such that the restriction is carried out if the state of charge exceeds a predetermined maximum state of charge and the inclination angle exceeds a predetermined maximum inclination angle, in order to avoid the production of high battery voltages by charging the battery (34) during regenerative deceleration of the industrial truck (10).

10. An industrial truck (10) according to claim 9, **characterized in that** the apparatus for restricting the driving speed (46) is configured such that the restriction is carried out only under the additional condition that a current direction of travel of the industrial truck (10) is oriented downwardly relative to the inclination angle.

11. The industrial truck according to claim 9 or 10, **characterized by** an apparatus for determining an inclination angle (44) relative to a current direction of travel.

12. The industrial truck according to one of claims 9 to 11, **characterized by** an apparatus (46) which predetermines different values of the maximum driving speed (vₘₐₓ) as a function of the state of charge and the inclination angle.

13. The industrial truck according to one of claims 9 to 12, **characterized by** an apparatus for restricting an acceleration (48) of the industrial truck (10) to a maximum acceleration (aₘₐₓ), the value of said maximum acceleration being less than a peak acceleration of the industrial truck (10).

14. The industrial truck according to one of claims 9 to 13, **characterized by** an apparatus for determining a current elevation of the industrial truck (10) relative to an initial position, wherein the apparatus is configured for restricting the driving speed (46) and/or the acceleration (48) such that the restriction of the driving speed and/or the acceleration is carried out irrespective of the inclination angle if the current elevation exceeds a predetermined maximum elevation.

15. The industrial truck according to claim 14, **characterized in that** the apparatus for determining a current elevation is configured such that it determines the current elevation continuously on the basis of the route sections covered and the associated inclination angles.

## Revendications

1. Procédé de fonctionnement d'un chariot élévateur (10) entraîné électriquement selon l'une des revendications 9 à 15, comprenant les étapes suivantes :
- chargement d'une batterie (34) avec un courant de charge, lequel est produit par un moteur d'entraînement de conduite (16) lors du freinage par générateur du chariot élévateur (10), **caractérisé par** les étapes suivantes :
- détermination d'un angle d'inclinaison du chariot élévateur (10) à l'aide d'un capteur d'accélération (56) ou d'un capteur d'angle (68) au moins par rapport à un plan horizontal,
- détermination d'un état de charge de la batterie (34) sur la base d'une tension de batterie mesurée,
- limitation de la vitesse de conduite du chariot élévateur (10) à une vitesse de conduite maximale (vₘₐₓ), laquelle est inférieure à une vitesse de conduite maximale autorisée pendant le fonctionnement du chariot élévateur (10) sur un sol plat, si l'état de charge dépasse un état de charge maximal prédéfini et si l'angle d'inclinaison dépasse un l'angle d'inclinaison maximal prédéfini, afin d'empêcher l'apparition de tensions de batterie élevées dues au chargement de la batterie (34) lors du freinage par générateur du chariot élévateur (10).

2. Procédé selon la revendication 1, **caractérisé en ce que** la limitation de la vitesse de conduite n'est appliquée que sous la condition supplémentaire qu'une direction de déplacement actuelle du chariot élévateur (10) soit dirigée vers le bas par rapport à l'angle d'inclinaison.

3. Procédé selon la revendication 1 ou 2, **caractérisé en ce que** l'angle d'inclinaison est toujours rapporté à une direction de déplacement actuelle.

4. Procédé selon l'une des revendications 1 à 3, **caractérisé en ce que** la limitation de la vitesse de conduite est appliquée par actionnement du moteur d'entraînement de conduite (16).

5. Procédé selon l'une des revendications 1 à 4, **caractérisé en ce que** la vitesse de conduite maximale (vₘₐₓ) prend des valeurs différentes en fonction de l'état de charge et de l'angle d'inclinaison.

6. Procédé selon l'une des revendications 1 à 5, **caractérisé en ce qu'**une limitation d'une accélération du chariot élévateur (10) à une accélération maximale (aₘₐₓ), dont la valeur est inférieure à une accélération maximale du chariot élévateur (10), est appliquée en plus de la limitation de la vitesse de conduite.

7. Procédé selon l'une des revendications 1 à 6, **caractérisé en ce qu'**une hauteur actuelle du chariot élévateur (10) par rapport à une position initiale est déterminée et une limitation de la vitesse de conduite et/ou de l'accélération est appliquée indépendamment de l'angle d'inclinaison si la hauteur actuelle dépasse une hauteur maximale prédéfinie.

8. Procédé selon la revendication 7, **caractérisé en ce que** la hauteur actuelle est déterminée continuellement sur la base de segments de trajet parcourus et d'angles d'inclinaison correspondants.

9. Chariot élévateur (10) entraîné électriquement, comprenant :
- un moteur d'entraînement de conduite (16),
- une batterie (34),
- une commande (30) permettant de commander le moteur d'entraînement de conduite (16),
- un dispositif de chargement (40) de la batterie (34) avec un courant de charge produit par le moteur d'entraînement de conduite (16) lors du freinage par générateur du chariot élévateur (10) et
- un dispositif de détermination d'un état de charge (42) de la batterie (34) sur la base d'une tension de batterie mesurée, **caractérisé par**
- un dispositif de détermination d'un angle d'inclinaison (44) du chariot élévateur (10) à l'aide d'un capteur d'accélération (56) ou d'un capteur d'angle (68) au moins par rapport à un plan horizontal et
- un dispositif de limitation de la vitesse de conduite (46) du chariot élévateur (10) à une vitesse de conduite maximale (vₘₐₓ), laquelle est inférieure à une vitesse de conduite maximale autorisée pendant le fonctionnement du chariot élévateur (10) sur un sol plat,
dans lequel le dispositif de limitation de la vitesse de conduite (46) est conçu de telle façon que la limitation est appliquée si l'état de charge dépasse un état de charge maximal prédéfini et si l'angle d'inclinaison dépasse un angle d'inclinaison maximal prédéfini, afin d'empêcher l'apparition de tensions de batterie élevées dues au chargement de la batterie (34) lors du freinage par générateur du chariot élévateur (10).

10. Chariot élévateur (10) selon la revendication 9, **caractérisé en ce que** le dispositif de limitation de la vitesse de conduite (46) est conçu de telle façon que la limitation n'est appliquée que sous la condition supplémentaire qu'une direction de déplacement actuelle du chariot élévateur (10) soit dirigée vers le bas par rapport à l'angle d'inclinaison.

11. Chariot élévateur selon la revendication 9 ou 10, **caractérisé par** un dispositif de détermination d'un angle d'inclinaison (44) par rapport à une direction de déplacement actuelle.

12. Chariot élévateur selon l'une des revendications 9 à 11, **caractérisé par** un dispositif (46) fixant des valeurs différentes pour la vitesse de conduite maximale (vₘₐₓ) en fonction de l'état de charge et de l'angle d'inclinaison.

13. Chariot élévateur selon l'une des revendications 9 à 12, **caractérisé par** un dispositif de limitation d'une accélération (48) du chariot élévateur (10) à une accélération maximale (aₘₐₓ), dont la valeur est inférieure à une accélération maximale du chariot élévateur (10).

14. Chariot élévateur selon l'une des revendications 9 à 13, **caractérisé par** un dispositif de détermination d'une hauteur actuelle du chariot élévateur (10) par rapport à une position initiale, dans lequel le dispositif de limitation de la vitesse de conduite (46) et/ou de l'accélération (48) est conçu de telle façon que la limitation de la vitesse de conduite et/ou de l'accélération est appliquée indépendamment de l'angle d'inclinaison si la hauteur actuelle dépasse une hauteur maximale prédéfinie.

15. Chariot élévateur selon la revendication 14, **caractérisé en ce que** le dispositif de détermination d'une hauteur actuelle est conçu de manière à déterminer la hauteur actuelle continuellement sur la base de segments de trajet parcourus et d'angles d'inclinaison correspondants.
